# EUROPÄISCHE PATENTSCHRIFT

(11) **EP 1 251 283 B1**
(45) Veröffentlichungstag und Bekanntmachung des Hinweises auf die Patenterteilung: **14.06.2006**
(21) Anmeldenummer: 02007692.3
(22) Anmeldetag: 05.04.2002
(51) Int. Cl.: F15B 13/00, F16K 31/00

(54) **Baukasten zur Herstellung eines fluidtechnischen Steuergerätes**
Kit for making a fluid control device
Kit pour fabriquer un dispositif de contrôle fluidique

(30) Priorität: 20.04.2001 DE 20107330 U
(43) Veröffentlichungstag der Anmeldung: 23.10.2002
(73) Patentinhaber: FESTO AG & Co, 73734 Esslingen (DE)
(72) Erfinder: Soblik, Wolfgang, Dr., 73786 Remseck (DE)
(74) Vertreter: Abel, Martin

(56) Entgegenhaltungen:
- EP-A- 0 884 667
- EP-A- 1 041 325
- DE-A- 19 632 691
- DE-A- 19 711 227
- DE-A- 19 932 358
- DE-C- 19 916 839
- DE-U- 29 909 529

## Beschreibung

Die Erfindung betrifft einen Baukasten zur Herstellung eines fluidtechnischen Steuergerätes, das eine Mehrzahl von Ventileinheiten umfasst, die jeweils ein zur Fluidsteuerung dienendes Hauptventil und mindestens ein elektrisch betätigbares Vorsteuerventil enthalten, und das eine zentrale Ansteuerelektronik für die Vorsteuerventile aufweist, wobei die Vorsteuerventile zumindest teilweise als Piezoventile ausgebildet sind, und wobei die für die Piezoventile erforderliche Auflade- und Entladeelektronik aus den Piezoventilen ausgelagert ist und einen Bestandteil der zentralen Ansteuerelektronik bildet.

Ein derart realisiertes fluidtechnisches Steuergerät geht aus der EP-A-0884667 hervor. Es enthält mehrere durch Piezoventile vorgesteuerte Hauptventile und eine den Piezoventilen zugeordnete zentrale Ansteuerelektronik in Gestalt eines Mikrocomputers. Da keine den Piezoventilen einzeln vor Ort zugeordnete Auflage- und Entladeelektroniken beschrieben sind, sei angenommen, dass diese Funktion vom Mikrocomputer ausgeführt wird.

In der EP-A-1041325 wird ein fluidtechnisches Steuergerät offenbart, dessen Ventileinheiten plattenartig ausgebildet und zu einer Baugruppe zusammengefasst sind. Als Ventilantriebe sind entweder Magnetantriebe oder Piezoventile vorgesehen, deren Aufbau nicht näher erläutert ist.

Aus der DE-A-19711227 geht ein fluidtechnisches Steuergerät hervor, bei dem mehrere Ventileinheiten zu einer Ventilbaugruppe zusammengefasst sind und jeweils zwei Vorsteuerventile enthalten, die von elektrisch betätigbaren Magnetventilen gebildet sind. Ein Nachteil dieses bekannten Steuergerätes besteht darin, dass die Baugröße der Magnetventile ein gewisses Mindestmaß nicht unterschreiten kann, so dass der Reduzierung der Abmessungen des Steuergerätes Grenzen gesetzt sind.

Es ist die Aufgabe der vorliegenden Erfindung, Maßnahmen zu treffen, durch die ein Steuergerät mit kompakten Abmessungen realisierbar ist.

Zur Lösung dieser Aufgabe ist vorgesehen, dass der Baukasten neben den Piezoventilen auch Magnetventile als Vorsteuerventile enthält, wobei die Piezoventile und die Magnetventile über identische fluidische Schnittstellen verfügen, mit denen sie alternativ an den Hauptventilen installierbar sind, um wahlweise ein mit Piezoventilen oder ein mit Magnetventilen vorgesteuertes Steuergerät zu erhalten.

Mit dem Ersatz von Magnetventilen durch Piezoventile können Vorsteuerventile mit geringeren Abmessungen und zugleich reduzierter Wärmeentwicklung realisiert werden, was einen kompakteren und energetisch günstigeren Aufbau des fluidtechnischen Steuergerätes ermöglicht. Indem die für die Betätigung von Piezoventilen erforderliche Auflade- und Entladeelektronik nicht dezentral im jeweiligen Piezoventil vorgesehen ist, sondern eine sämtlichen Piezoventilen gemeinsame Auflade- und Entladeelektronik zentralisiert in der Auswerteelektronik vorgesehen ist, kann zudem der bauliche Aufwand beträchtlich minimiert werden. Man kann auf einfachst gestaltete Piezoventile zurückgreifen, so dass der Kostenaufwand auch bei einer großen Anzahl von Vorsteuerventilen niedrig gehalten wird. Da der Baukasten neben den Piezoventilen auch Magnetventile als Vorsteuerventile enthält, wobei die Piezoventile und die Magnetventile über identische fluidische Schnittstellen verfügen, mit denen sie alternativ an den Hauptventilen installierbar sind, lässt sich wahlweise ein mit Piezoventilen oder mit Magnetventilen vorgesteuertes Steuergerät erhalten.

Aus der DE-C-19916839 ist es zwar bereits bekannt, Piezoventile als Vorsteuerventile für zur Fluidsteuerung dienende Hauptventile einzusetzen. Allerdings ist dort jedem Piezoventil eine eigene, die Auflade- und Entladeelektronik enthaltende Ventilelektronik zugeordnet, so dass beim Aufbau eines mehrere Piezoventile enthaltenden Steuergerätes eine entsprechend aufwendige elektronische Ausstattung erforderlich ist.

Vorteilhafte Weiterbildungen der Erfindung gehen aus den Unteransprüchen hervor.

In vielen Fällen wird die für die Betätigung der Piezoventile erforderliche Spannung höher sein als die am Einsatzort zur Verfügung stehende. In diesem Falle ist es zweckmäßig, wenn die Ansteuerelektronik auch eine sämtlichen angeschlossenen Piezoventilen gemeinsam zugeordnete Spannungserhöhungsschaltung aufweist.

Bei einem bevorzugten Aufbau des hergestellten Steuergerätes sind die Ventileinheiten in einer Aufreihungsrichtung aufeinanderfolgend anordenbar. Dabei kann die Ansteuerelektronik auf einer Leiterplatte aufgebaut sein, um besonders kompakte Abmessungen zu realisieren.

Es ist ebenfalls möglich, die Ventileinheiten gemeinsam auf einem Ventilträger zu installieren, auf dem auch die Ansteuerelektronik sitzt, die dann beispielsweise in einem Ansteuerblock integriert ist.

Zweckmäßigerweise verfügen die Piezoventile und die Magnetventile auch über identische elektrische Schnittstellen zur Verbindung mit einer zentralen Ansteuerelektronik.

Nachfolgend wird die Erfindung anhand der beiliegenden Zeichnung näher erläutert. Es zeigen im einzelnen:
- Fig. 1: ein erstes Ausführungsbeispiel eines durch den Baukasten realisierten fluidtechnischen Steuergerätes in perspektivischer, schematischer Darstellung,
- Fig. 2: das Steuergerät aus Fig. 1 in Seitenansicht mit Blickrichtung gemäß Pfeil II und
- Fig. 3: ein weiteres Ausführungsbeispiel des fluidtechnischen Steuergerätes, wiederum in schematischer Darstellung und in Seitenansicht.

Die beiden aus der Zeichnung ersichtlichen Ausführungsformen eines allgemein mit Bezugsziffer 1 bezeichneten fluidtechnischen Steuergerätes werden beispielsweise zur Ansteuerung einer Maschine, einer Anlage oder einzelner Arbeitsgeräte verwendet, die (auch) fluidisch, also beispielsweise pneumatisch und/oder hydraulisch, betrieben werden.

Bei den abgebildeten Steuergeräten ist gemeinsam, dass sie eine Mehrzahl von Ventileinheiten 2 beinhalten, die in einer durch einen Pfeil angedeuteten Aufreihungsrichtung 3 aufeinanderfolgend angeordnet und zu einer Ventilbaugruppe 4 zusammengefasst sind.

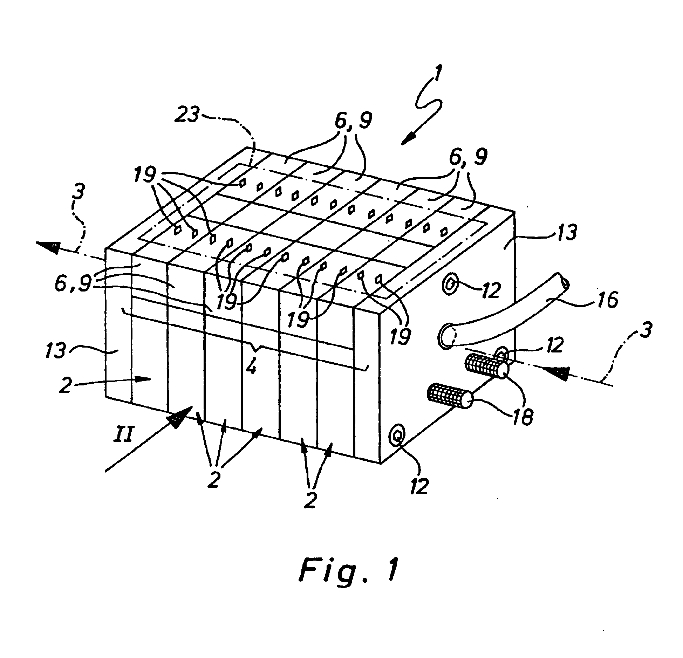

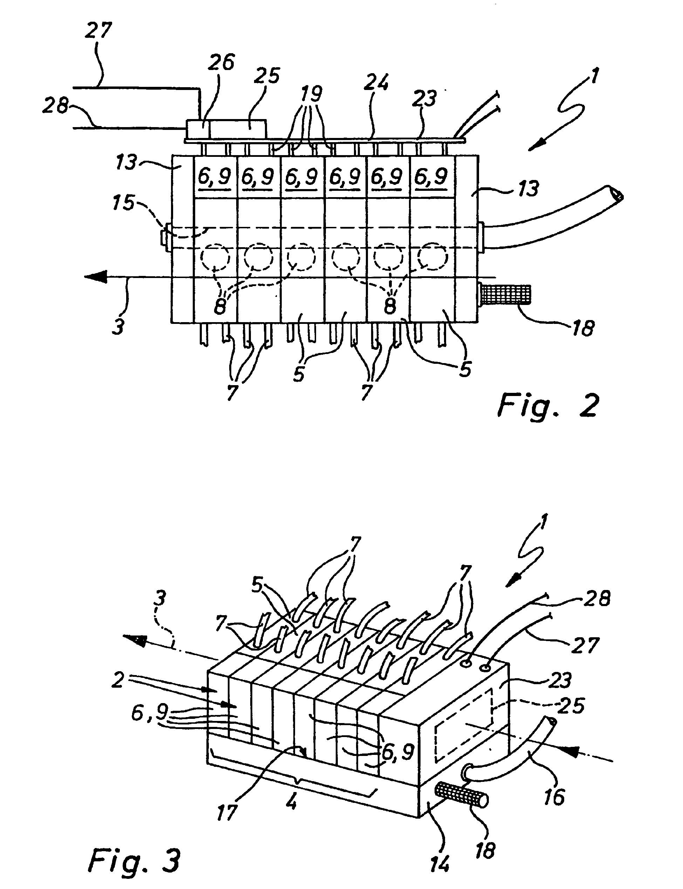

Die Ventileinheiten 2 der Ventilbaugruppe 4 enthalten jeweils ein Hauptventil 5 und ein oder mehrere Vorsteuerventile 6. Im Falle der Fig. 1 und 2 ist jedes Hauptventil 5 mit zwei Vorsteuerventilen 6 bestückt, im Falle der Fig. 3 verfügt jedes Hauptventil 5 über nur ein Vorsteuerventil 6 (obgleich auch hier pro Hauptventil 5 zwei Vorsteuerventile 6 möglich wären).

Die Hauptventile 5 dienen zur Fluidsteuerung, also zur Steuerung einer Fluidströmung von und zu den angeschlossenen Verbrauchern. Jedes Hauptventil ist mit mehreren Anschlüssen ausgestattet, von denen Fluidleitungen 7 wegführen können, die zu den anzusteuernden Verbrauchern führen.

Jedes Hauptventil 5 ist mit mindestens einem vorzugsweise schieberartigen Ventilglied 8 ausgestattet, das zwischen verschiedenen Positionen umschaltbar ist, um den gewünschten Fluidsteuerungseffekt herbeizuführen.

Die Betätigung des Ventilgliedes 8 und somit des Hauptventils 5 geschieht mittels der dem jeweiligen Hauptventil 5 zugeordneten Vorsteuerventile 6. Sie sind in der Lage, die Fluidströmung durch einen oder mehrere Vorsteuerkanäle zu steuern, um das zugeordnete Ventilglied 8 fluidisch mit einem Vorsteuerfluid zu beaufschlagen und dadurch in die gewünschte Schaltposition zu verbringen.

Beim Ausführungsbeispiel der Fig. 1 und 2 ist die Ventilbaugruppe 4 selbsttragend ausgebildet. Erreicht wird dies durch eine mechanische Verbindung mittels Zugankern 12, die die aufgereihten Hauptventile 5 durchsetzen und in stirnseitig an die Ventilbaugruppe 4 angesetzten Endplatten 13 verankert sind.

Abweichend hiervon besteht im Falle der Fig. 3 die Ventilbaugruppe 4 aus einer Mehrzahl von Ventileinheiten 2, die gemeinsam nebeneinander auf einem vorzugsweise plattenartigen starren Ventilträger 14 montiert sind.

Im Falle der Fig. 1 und 2 wird das zu steuernde Fluid, insbesondere Druckluft, den Hauptventilen 5 gemeinsam über einen Zentralkanal 15 zugeführt. Dieser durchsetzt die Hauptventile 5 in der Aufreihungsrichtung 3, wobei er sich aus einzelnen Fluidkanälen der benachbarten Ventileinheiten 2 zusammensetzt, die eine miteinander fluchtende Verbindung eingehen. Das Einspeisen des Druckmediums kann beispielsweise über eine Fluidleitung 16 an einer der Endplatten 13 erfolgen.

Das über den Zentralkanal 15 zugeführte Druckmedium steht sämtlichen Hauptventilen 5 zur Verteilung an die angeschlossenen Verbraucher zur Verfügung. Aus diesem Zentralkanal kann auch das von den Vorsteuerventilen 6 gesteuerte Vorsteuerfluid abgezweigt werden. Alternativ ist aber auch eine separate Zuführung möglich.

Auch beim Ausführungsbeispiel der Fig. 3 ist ein nicht näher dargestellter Zentralkanal 15 vorhanden, der hier im Ventilträger 14 verläuft. Er mündet über Zweigkanäle zu einer Bestückungsfläche 17 des Ventilträgers 14 aus, an der die Vorsteuerventile 6 mit ihren Hauptventilen 5 montiert sind.

Die von den Verbrauchern zurückströmende Abluft kann in vergleichbarer Weise über einen oder mehrere Zentralkanäle abgeführt werden. Am Steuergerät 1 vorgesehene Schalldämpfer 18 können das Ausströmgeräusch reduzieren.

Die Vorsteuerventile 6 werden elektrisch betätigt. Sie verfügen über lediglich aus Fig. 1 und 2 ersichtliche Kontaktmittel 19, beispielsweise in Gestalt von Steckkontakten, die die Einspeisung der erforderlichen elektrischen Betätigungssignale ermöglichen.

Die elektrischen Betätigungssignale liefert eine Ansteuerelektronik 23, die in Fig. 1 nur strichpunktiert angedeutet ist, um die von ihr abgedeckten Kontaktmittel 19 sichtbar zu machen.

Im Falle der Fig. 1 und 2 ist die Ansteuerelektronik 23 auf einer Leiterplatte 24 aufgebaut und erstreckt sich seitlich über, unter oder neben den Ventileinheiten 2. An der Ansteuerelektronik 23 sind hier elektrische Gegenkontaktmittel vorhanden, die mit den elektrischen Kontaktmitteln 19 der Vorsteuerventile 6 kontaktierbar sind.

Beim Ausführungsbeispiel der Fig. 3 sitzt die Ansteuerelektronik 23 neben den Ventileinheiten 2 ebenfalls auf dem Ventilträger 14. Sie ist hier zweckmäßigerweise in einen Ansteuerblock integriert. Die elektrische Kontaktierung mit den Vorsteuerventilen 6 geschieht beispielsweise über im Ventilträger 14 verlaufende elektrische Leiter, die aus Fig. 3 nicht ersichtlich sind.

Bei den elektrisch betätigbaren Vorsteuerventilen 6 handelt es sich durchweg um Piezoventile 9. Diese enthalten beim Ausführungsbeispiel ein aus Piezomaterial aufgebautes Piezo-Biegeelement, das durch Anlegen und Entfernen einer Betätigungsspannung ausgelenkt werden kann, um das zur Vorsteuerung der Hauptventile 5 verwendete Vorsteuerfluid zu steuern.

Zwar wäre es prinzipiell möglich, einige der Vorsteuerventile 6 konventionell als Magnetventile auszubilden, doch ist eine durchgängige Verwendung von Piezoventilen vorteilhafter, weil auf die gleiche Art der Ansteuerung zurückgegriffen werden kann.

Die Piezoventile 9 benötigen zu ihrer Betätigung eine Auflade- und Entladeelektronik 25. Diese Elektroniken können separat oder, vorzugsweise, kombiniert ausgebildet sein. Bei einem besonders einfachen Aufbau besteht die jeweilige Elektronik aus einem als Schalter fungierenden Transistor.

Durch die Auflade- und Entladeelektronik wird der Zufluss und Abfluss der elektrischen Ladung gesteuert, die für die Auslenkung des Ventilgliedes eines jeweiligen Piezoventils 9 verantwortlich ist.

Allerdings enthalten die einzelnen Piezoventile 9 selbst keine Elektronik für den Auflade- und Entladevorgang. Diese ist vielmehr ausgelagert, wobei eine sämtlichen Piezoventilen gemeinsam zugeordnete zentrale Auflade- und Entladeelektronik 25 als Bestandteil der zentralen Ansteuerelektronik 23 vorgesehen ist.

Der Aufbau der Piezoventile kann somit sehr einfach gehalten werden, da sie keine eigene Ventilelektronik benötigen. Dies ermöglicht einen äußerst kostengünstigen Aufbau des Steuergerätes 1 auch bei einer Ausstattung mit einer relativ großen Anzahl von Ventileinheiten 2.

Wie in Fig. 2 angedeutet ist, kann die Ansteuerelektronik 23 auch eine wiederum sämtlichen Piezoventilen 9 gemeinsam zugeordnete Spannungserhöhungsschaltung 26 aufweisen. Diese ist in der Lage, eine über eine Leitung 27 eingespeiste niedrige Versorgungsspannung - beispielsweise 24 Volt - auf die in der Regel höhere Betriebsspannung der Piezoventile 9 anzuheben, beispielsweise in der Größenordnung von 100 Volt.

Auf die Spannungserhöhungsschaltung 26 kann selbstverständlich verzichtet werden, wenn am Einsatzort bereits die für die Betätigung der Piezoventile 9 erforderliche höhere Betriebsspannung zur Verfügung gestellt werden kann.

Die Ansteuerelektronik 23 ist zweckmäßigerweise mit Anschlussmitteln für einen Feldbus 28 ausgestattet, über den Steuersignale zugeführt werden, die die Art und Weise der Betätigung der Piezoventile steuern, beispielsweise Zeitpunkt und Zeitdauer der Betätigung.

Zusätzlich zu einem Busknoten, der eine Vernetzung mit anderen Steuergeräten und/oder einer übergeordneten elektronischen Steuereinrichtung ermöglicht, kann die Ansteuerelektronik auch über ein eigenes, vorzugsweise frei programmierbares Steuerprogramm verfügen.

Das beispielhaft beschriebene Steuergerät hat den weiteren Vorteil, dass es als Bestandteil eines Baukastens ausgeführt ist, der sowohl Piezoventile 9 als auch nicht näher dargestellte Magnetventile als Vorsteuerventile 6 enthält, die alternativ installiert werden können, um wahlweise ein mit Piezoventilen oder ein mit Magnetventilen vorgesteuertes Steuergerät 1 zu erhalten. Die Piezoventile und Magnetventile haben identische fluidische Schnittstellen zur Montage an den Hauptventilen, so dass ohne besondere Umrüstmaßnahmen eine wahlweise Montage der gewünschten Art von Vorsteuerventilen 6 möglich ist.

Auch die elektrischen Schnittstellen zur Verbindung mit der zentralen Ansteuerelektronik sind zweckmäßigerweise identisch, so dass vorhandene elektrische Verknüpfungsmittel für beide Arten von Vorsteuerventilen 6 geeignet sind.

Der Baukasten kann auch zusätzlich eine eigene zentrale Ansteuerelektronik für speziell ein mit Magnetventilen aufgebautes Steuergerät enthalten, die bei Bedarf an Stelle der die Auflade- und Entladeelektronik 25 enthaltenden, für die Ansteuerung der Piezoventile vorgesehehen Ansteuerelektronik 23 installiert werden kann.

## Patentansprüche

1. Baukasten zur Herstellung eines fluidtechnischen Steuergerätes, das eine Mehrzahl von Ventileinheiten (2) umfasst, die jeweils ein zur Fluidsteuerung dienendes Hauptventil (5) und mindestens ein elektrisch betätigbares Vorsteuerventil (6) enthalten, und das eine zentrale Ansteuerelektronik (23) für die Vorsteuerventile (6) aufweist, wobei die Vorsteuerventile (6) zumindest teilweise als Piezoventile (9) ausgebildet sind und wobei die für die Piezoventile (9) erforderliche Auflade- und Entladeelektronik (25) aus den Piezoventilen (9) ausgelagert ist und einen Bestandteil der zentralen Ansteuerelektronik (23) bildet, **dadurch gekennzeichnet, dass** der Baukasten neben den Piezoventilen (9) auch Magnetventile als Vorsteuerventile (6) enthält, wobei die Piezoventile und die Magnetventile über identische fluidische Schnittstellen verfügen, mit denen sie alternativ an den Hauptventilen (5) installierbar sind, um wahlweise ein mit Piezoventilen (9) oder ein mit Magnetventilen vorgesteuertes Steuergerät zu erhalten.

2. Baukasten nach Anspruch 1, **dadurch gekennzeichnet, dass** die Piezoventile (9) und die Magnetventile identische elektrische Schnittstellen zur Verbindung mit einer zentralen Ansteuerelektronik aufweisen.

3. Baukasten nach Anspruch 1 oder 2, **dadurch gekennzeichnet, dass** er zusätzlich eine alternativ zu der die Auflade- und Entladeelektronik (25) enthaltenden Ansteuerelektronik (23) installierbare zentrale Ansteuerelektronik für speziell ein mit Magnetventilen aufgebautes Steuergerät enthält.

4. Baukasten nach einem der Ansprüche 1 bis 3, **dadurch gekennzeichnet, dass** die Ansteuerelektronik (23) eine sämtlichen angeschlossenen Piezoventilen (9) gemeinsam zugeordnete Spannungserhöhungsschaltung (26) aufweist.

5. Baukasten nach einem der Ansprüche 1 bis 4, **dadurch gekennzeichnet, dass** er die Herstellung eines Steuergerätes ermöglicht, bei dem sämtliche Vorsteuerventile (6) von Piezoventilen (9) gebildet sind.

6. Baukasten nach einem der Ansprüche 1 bis 5, **dadurch gekennzeichnet, dass** die Ventilglieder der Piezoventile (9) von Piezo-Biegeelementen gebildet sind.

7. Baukasten nach einem der Ansprüche 1 bis 6, **dadurch geKennzeichnet, dass** die Ventileinheiten (2) zu einer Ventilbaugruppe (4) zusammenfassbar sind.

8. Baukasten nach Anspruch 7, **dadurch gekennzeichnet, dass** die Ventileinheiten (2) durch mechanische Verbindung zu einer selbsttragenden Ventilbaugruppe (4) zusammanfassbar sind.

9. Baukasten nach einem der Ansprüche 1 bis 8, **dadurch gekennzeichnet, dass** die Ventileinheiten (2) in einer Aufreihungsrichtung (3) aufeinanderfolgend anordenbar sind.

10. Baukasten nach Anspruch 9, **dadurch gekennzeichnet, dass** die Hauptventile (5) jeweils von mindestens einem Fluidkanal durchsetzt sind, wobei Fluidkanäle benachbarter Ventileinheiten (2) derart miteinander in Verbindung bringbar sind dass sich mindestens ein alle Hauptventile (5) durchziehender Zentralkanal (15) ergibt.

11. Baukasten nach einem der Ansprüche 1 bis 10, **dadurch gekennzeichnet, dass** die Ventileinheiten (2) auf einem Ventilträger (14) installierbar sind, auf dem zweckmäßigerweise auch die Ansteuerelektronik (23) montierbar ist.

## Claims

1. Module for the creation of a fluidic control unit, comprising a multiplicity of valve units (2), each containing a main valve (5) serving for fluidic control and one or more electrically actuable pilot valves (6), and having central control electronics (23) for the pilot valves (6), wherein the pilot valves (6) are at least partially in the form of piezoelectric valves (9) and wherein the charge and discharge electronics (25) for the piezoelectric valves (9) are located outside the piezoelectric valves (9) and form a part of the central control electronics (23), **characterised in that** besides the piezoelectric valves (9), the module also contains solenoid valves as pilot valves (6), wherein the piezoelectric valves and the solenoid valves have identical fluidic interfaces by which they may be installed alternatively on the main valves (5), in order to obtain a control unit piloted by piezoelectric valves (9) or by solenoid valves.

2. Module according to claim 1, **characterised in that** the piezoelectric valves (9) and the solenoid valves have identical electrical interfaces for connection to central control electronics.

3. Module according to claim 1 or 2, **characterised in that** it also contains, for installation as an alternative to the control electronics (23) containing the charge and discharge electronics (25), central control electronics for a control unit made up specially of solenoid valves.

4. Module according to any of claims 1 to 3, **characterised in that** the control electronics (23) have a voltage boosting circuit (26) assigned jointly to all connected piezoelectric valves (9).

5. Module according to any of claims 1 to 4, **characterised in that** it facilitates the creation of a control unit in which all pilot valves (6) are formed by piezoelectric valves (9).

6. Module according to any of claims 1 to 5, **characterised in that** the valve elements of the piezoelectric valves (9) are formed by piezoelectric bending elements.

7. Module according to any of claims 1 to 6, **characterised in that** the valve units (2) may be combined to form a valve assembly (4).

8. Module according to claim 7, **characterised in that** the valve units (2) may be combined by means of mechanical connection to a self-supporting valve assembly (4).

9. Module according to any of claims 1 to 8, **characterised in that** the valve units (2) may be arranged consecutively in one direction of lining-up (3).

10. Module according to claim 9, **characterised in that** one or more fluid passages pass through each of the main valves (5), wherein fluid passages of adjacent valve units (2) may be connected to one another in such a way as to produce at least one central passage (15) which passes through all main valves (5).

11. Module according to any of claims 1 to 10, **characterised in that** the valve units (2) may be installed on a valve support (14) on which the control electronics (23) are also expediently mounted.

## Revendications

1. Kit pour fabriquer un appareil de commande fluidique qui comprend une pluralité d'unités de soupapes (2) lesquelles contiennent chacune une soupape principale (5) servant à la commande du fluide et au moins une soupape pilote (6) à actionnement électrique, et qui comporte une électronique centrale de commande (23) pour les soupapes pilotes (6), les soupapes pilotes (6) étant réalisées au moins en partie sous la forme de piézo-soupapes (9) et l'électronique de charge et de décharge (25), nécessaire aux piézo-soupapes (9), étant extérieure aux piézo-soupapes (9) et formant partie intégrante de l'électronique centrale de commande (23), **caractérisé en ce que** le kit contient, outre les piézo-soupapes (9), également des soupapes magnétiques servant de soupapes pilotes (6), les piézo-soupapes et les soupapes magnétiques disposant d'interfaces fluidiques identiques au moyen desquelles elles peuvent être installées indifféremment sur les soupapes principales (5) afin d'obtenir au choix un appareil de commande à commande pilote avec des piézo-soupapes (9) ou avec des soupapes magnétiques.

2. Kit selon la revendication 1, **caractérisé en ce que** les piézo-soupapes (9) et les soupapes magnétiques comportent des interfaces électriques identiques pour la liaison avec une électronique centrale de commande.

3. Kit selon la revendication 1 ou 2, **caractérisé en ce qu'**il contient en outre une électronique centrale de commande pouvant être installée en variante à l'électronique de commande (23) contenant l'électronique de charge et de décharge (25), spécialement pour un appareil de commande construit avec des soupapes magnétiques.

4. Kit selon l'une des revendications 1 à 3, **caractérisé en ce que** l'électronique de commande (23) comporte un circuit d'élévation de la tension (26) associé de manière commune à toutes les piézo-soupapes (9) raccordées.

5. Kit selon l'une des revendications 1 à 4, **caractérisé en ce qu'**il permet la réalisation d'un appareil de commande dans lequel toutes les soupapes pilotes (6) sont formées par des piézo-soupapes (9).

6. Kit selon l'une des revendications 1 à 5, **caractérisé en ce que** les organes obturateurs des piézo-soupapes (9) sont formés par des piézo-éléments à flexion.

7. Kit selon l'une des revendications 1 à 6, **caractérisé en ce que** les unités de soupapes (2) peuvent être réunies en un bloc-soupapes (4).

8. Kit selon la revendication 7, **caractérisé en ce que** les unités de soupapes (2) peuvent être réunies par liaison mécanique en un bloc-soupapes (4) autoportant.

9. Kit selon l'une des revendications 1 à 8, **caractérisé en ce que** les unités de soupapes (2) peuvent être disposées les unes à la suite des autres dans une direction de juxtaposition (3).

10. Kit selon la revendication 9, **caractérisé en ce que** les soupapes principales (5) sont traversées chacune par au moins un canal à fluide, les canaux à fluide d'unités de soupapes (2) voisines pouvant être amenés en liaison entre eux de manière que l'on obtienne au moins un canal central (15) traversant toutes les soupapes principales (5).

11. Kit selon l'une des revendications 1 à 10, **caractérisé en ce que** les unités de soupapes (2) peuvent être installées sur un porte-soupapes (14) sur lequel peut être montée avantageusement aussi l'électronique de commande (23).
